# EUROPÄISCHE PATENTSCHRIFT

(11) **EP 2 999 530 B1**
(45) Veröffentlichungstag und Bekanntmachung des Hinweises auf die Patenterteilung: **31.01.2018**
(21) Anmeldenummer: 13730596.7
(22) Anmeldetag: 24.06.2013
(51) Int. Cl.: B01D 9/00, B01D 61/36

(54) **KRISTALLISATIONSSYSTEM UND -VERFAHREN**
CRYSTALLIZATION SYSTEM AND PROCESS
SYSTÈME ET PROCÉDÉ DE CRISTALLISATION

(43) Veröffentlichungstag der Anmeldung: 30.03.2016
(73) Patentinhaber: Stumpf-Fels, Dennis, 86343 Königsbrunn (DE)
(72) Erfinder: Heinzl, Wolfgang, 83561 Ramerberg (DE)
(74) Vertreter: Boura, Olivier
(86) Internationale Anmeldenummer: PCT/EP2013/063161
(87) Internationale Veröffentlichungsnummer: WO 2014/206442

(56) Entgegenhaltungen:
- DE-A1-102009 020 128
- DE-A1-102011 108 909
- GB-A- 2 146 911
- US-A- 4 476 024

## Beschreibung

Die vorliegende Erfindung betrifft ein System sowie ein Verfahren zur Kristallisation eines in einem Lösungsmittel gelösten auszukristallisierenden Stoffs, insbesondere Salzes.

Die Kristallisation kann verschiedene Anwendungsbereiche haben, beispielsweise die Rein- und Reinststoffgewinnung unter anderem für die Pharmazie, die fraktionierte Kristallisation zur Ausfällung von zwei oder mehr in einer Lösung vorliegenden Substanzen und die Reduzierung des Volumens einer salzhaltigen Lösung sowie die Gewinnung des/der Salze durch Kristallisation.

Sofern aus einer Lösung mit einem darin gelösten Stoff Kristalle erzeugt werden sollen, muss die Lösung aufkonzentriert werden, das heißt, zumindest ein Teil des Lösungsmittels muss entfernt, beispielsweise verdampft werden. Durch das Entfernen von Lösungsmittel kommt es zur Sättigung, Übersättigung und schließlich Kristallisation. Das teilweise Entfernen des Lösungsmittels, beispielsweise mittels Verdampfung, ist stets energieaufwendig. Energiesparende Möglichkeiten zur Aufkonzentration einer Lösung sind zum Beispiel die Multieffekt-Verdampfung. Ferner kann die Multieffekt-Verdampfung sowohl mit einem thermischen als auch mit einem mechanischen Brüdenverdichter kombiniert werden.

Für die Verwendung von Brüdenverdichtern ist immer eine gute Wärmeübertragung nötig. Die Wärme muss dabei über einen die aufzukonzentrierende Lösung führenden Strömungskanal übertragen werden. Der Strömungskanal ist auf einer Seite von einer lösungsdichten, dampfdichten Fläche und auf der anderen Seite von einer lösungsdichten, dampfdurchlässigen Membranwand begrenzt. Wird aus der aufzukonzentrierenden Lösung über die Membranwand Lösungsmittel entzogen, kommt es zur Sättigung sowie Übersättigung der Lösung und schließlich zur Kristallisation. Um eine möglichst gute Wärmeübertragung über den Strömungskanal zu erreichen, weist der Strömungskanal, über den die Wärme zu übertragen ist, in herkömmlichen Kristallisationsvorrichtungen eine möglichst geringe Breite auf.

Die von der aufzukonzentrierenden Lösung durchströmten Strömungskanäle werden üblicherweise mittels Abstandsgittern, sogenannten Spacern, offen gehalten. Die Abstandsgitter sind insbesondere nötig, wenn die lösungsdichten, dampfdichten Flächen und die lösungsdichten, dampfdurchlässigen Membranwände aus Kunststoffen bestehen oder sich die Strömungskanäle auf unterschiedlichen Absolutdrücken befinden. Kommt es zur Kristallisation, können sich in den dünnen Strömungskanälen in den Abstandsgittern Kristalle festsetzen und den Strömungskanal blockieren oder die Membranwand beschädigen. Sofern die Membranwand mikroporös ist und es zu einer Kristallisation an der Membranwand kommt, so kann dies zu einem Durchwachsen der Kristalle durch die Membranwand führen. Als Folge kann die aufzukonzentrierende Lösung über die durch die Membranwand hindurch gewachsenen Kristalle in den benachbarten Strömungskanal gelangen.

Das Dokument GB 2 146 911 A beschreibt ein Verfahren zum Trennen von Flüssigkeitsgemischen oder Lösungen mit Hilfe einer porösen Trennwand. Das Dokument DE 10 2011 108 909 A1 beschreibt eine Membrandestillationsvorrichtung.

Der Erfindung liegt die Aufgabe zugrunde, ein verbessertes System zur Kristallisation eines in einem Lösungsmittel gelösten auszukristallisierenden Stoffs zu schaffen, das eine zuverlässige und effiziente Kristallisation gewährleistet, ohne das die Strömungskanäle durch Kristalle blockiert werden oder es zu einem Durchwachsen der Kristalle durch die Membranwand kommt. Ferner soll ein entsprechendes Verfahren angegeben werden.

Die der Erfindung zugrunde liegende Aufgabe wird durch ein System zur Kristallisation eines in einem Lösungsmittel gelösten auszukristallisierenden Stoffs, insbesondere Salzes gelöst, das eine von einer aufzukonzentrierenden Lösung, die das Lösungsmittel mit dem darin gelösten auszukristallisierenden Stoff aufweist, und von einem Heizdampf oder einer Heizflüssigkeit durchströmte Kristallisationsvorrichtung aufweist.

Die Kristallisationsvorrichtung enthält wenigstens einen die aufzukonzentrierende Lösung führenden Strömungskanal, wenigstens einen den Heizdampf oder die Heizflüssigkeit führenden Strömungskanal und wenigstens einen dampfförmiges Lösungsmittel führenden Strömungskanal. Ein jeweiliger die aufzukonzentrierende Lösung führender Strömungskanal ist von einem jeweiligen den Heizdampf oder die Heizflüssigkeit führenden Strömungskanal zumindest teilweise durch eine dampfdichte und flüssigkeitsdichte Wand getrennt. Ein jeweiliger die aufzukonzentrierende Lösung führender Strömungskanal ist ferner von einem jeweiligen das dampfförmige Lösungsmittel führenden Strömungskanal zumindest teilweise durch eine für das dampfförmige Lösungsmittel, nicht jedoch für das flüssige Lösungsmittel durchlässige Membranwand getrennt.

Die Kristallisationsvorrichtung ist derart ausgestaltet, dass während des Betriebs der Kristallisationsvorrichtung Wärme durch die dampf- und flüssigkeitsdichte Wand von dem Heizdampf oder der Heizflüssigkeit auf die aufzukonzentrierende Lösung übertragen wird und die aufzukonzentrierende Lösung in dem jeweiligen die aufzukonzentrierende Lösung führenden Strömungskanal siedet. Das beim Sieden erzeugte dampfförmige Lösungsmittel gelangt durch die Membranwand hindurch in den angrenzenden, das dampfförmige Lösungsmittel führenden Strömungskanal. Dies hat zur Folge, dass der aufzukonzentrierenden Lösung Lösungsmittel entzogen wird. Durch die zunehmende Konzentration des gelösten auszukristallisierenden Stoffs in der aufzukonzentrierenden Lösung beginnen Keimbildung und Kristallisation.

Durch das Sieden der aufzukonzentrierenden Lösung wird vorteilhafterweise eine hohe Wärmeübertragung über den die aufzukonzentrierende Lösung führenden Strömungskanal erzielt. Ferner führt das Sieden dazu, dass sich die Membranwand und die dampf- und flüssigkeitsdichte Wand bewegen und die Kristalle, die sich bei zunehmender Aufkonzentration der Lösung an den Oberflächen der Membranwand und der dampf- und flüssigkeitsdichten Wand gebildet haben, sich von den Oberflächen lösen oder weniger fest haften. Aufgrund des Dichteunterschieds der Kristalle zur aufzukonzentrierenden Lösung sedimentieren die Kristalle. Darüber hinaus werden durch das Sieden der aufzukonzentrierenden Lösung Temperatur- und Konzentrationsgradienten, die sich insbesondere an der Membranwand ausbilden, reduziert.

Die dampfdurchlässige, flüssigkeitsdichte Membranwand kann die Wandung eines Hohlfadens oder eines Rohrs oder ein flächiges Element sein. Die Kristallisationsvorrichtung kann beispielsweise als Hohlfaden- oder Rohrbündel, Plattenmodul oder Wickelmodul aufgebaut sein. Die Membranwand kann beispielsweise aus mikroporösen, hydrophoben Stoffen, zum Beispiel aus Polytetrafluorethylen, Polypropylen, Polyethylen oder Polyvinylidenfluorid hergestellt sein.

Um ein Sieden der aufzukonzentrierenden Lösung in dem jeweiligen Strömungskanal zu bewirken, wird bevorzugt der hydrostatische Druck der aufzukonzentrierenden Lösung so eingestellt, insbesondere abgesenkt, dass der der Temperatur der aufzukonzentrierenden Lösung entsprechende Siededruck erreicht wird. Dazu wird die Kristallisationsvorrichtung bei einem Unter- oder Überdruck bezogen auf den außerhalb der Kristallisationsvorrichtung herrschenden Umgebungsdruck betrieben. Um die Kristallisationsvorrichtung vom Umgebungsdruck abzutrennen, sind dem Fachmann bekannte Maßnahmen zu treffen, wie zum Beispiel der Einsatz von Ventilen in den Zu- und Ableitungen. Ferner können insbesondere Pumpen eingesetzt werden, um den gewünschten Druck in den Strömungskanälen zu erzeugen.

Gemäß einer bevorzugten Ausgestaltung herrscht in dem wenigstens einen das dampfförmige Lösungsmittel führenden Strömungskanal ein niedrigerer Druck als in dem wenigstens einen den Heizdampf oder die Heizflüssigkeit führenden Strömungskanal. Vorzugsweise befindet sich der wenigstens eine das dampfförmige Lösungsmittel führende Strömungskanal auf dem Siededruck der über die Membranwand benachbarten aufzukonzentrierenden Lösung, der um den Betrag des durch die Membranwand verursachten Druckverlusts nach unten korrigiert ist.

Bei herkömmlichen Kristallisationsvorrichtungen ist die Breite des die aufzukonzentrierende Lösung führenden Strömungskanals üblicherweise möglichst klein, um eine gute Wärmeübertragung über den Strömungskanal sicherzustellen. Typischerweise liegt die Breite im Bereich von 0,5 bis 1 mm. Erfindungsgemäß weist der die aufzukonzentrierende Lösung führende Strömungskanal eine Breite von mindestens 3 mm und insbesondere nicht mehr als 10 mm auf. Insbesondere kann die Breite des die aufzukonzentrierende Lösung führenden Strömungskanals auch mindestens 4 mm oder 5 mm betragen. Durch die erhöhte Breite des die aufzukonzentrierende Lösung führenden Strömungskanals wird die Wahrscheinlichkeit reduziert, dass der Strömungskanal durch Kristalle blockiert wird. Eine gute Wärmeübertragung über den die aufzukonzentrierende Lösung führenden Strömungskanal wird bei der erfindungsgemäßen Kristallisationsvorrichtung trotz der erhöhten Breite des Strömungskanals durch das Sieden der aufzukonzentrierenden Lösung gewährleistet.

Erfindungsgemäß schließt sich unten an einen jeweiligen die aufzukonzentrierende Lösung führenden Strömungskanal ein Sedimentsammelbehälter an, in dem das Sediment, d. h. die erzeugten Kristalle, aufgefangen werden. Der Sedimentsammelbehälter ist vorteilhafterweise mit der aufzukonzentrierenden Lösung gefüllt, wird jedoch nicht von der aufzukonzentrierenden Lösung durchströmt. Am unteren Bereich des Sedimentsammelbehälters kann ein Auslass vorgesehen sein, über den der Sedimentsammelbehälter zum Beispiel sensorüberwacht entleert werden kann.

Für den Fall, dass ein Teil der aufzukonzentrierenden Lösung aufgrund von Leckage in flüssiger Form durch die Membranwand gelangt, ist gemäß einer bevorzugten Ausgestaltung unten an einem jeweiligen das dampfförmige Lösungsmittel führenden Strömungskanal ein Flüssigkeitssammelbehälter zur Sammlung der in den jeweiligen das dampfförmige Lösungsmittel führenden Strömungskanal gelangten aufzukonzentrierenden Lösung vorgesehen. Der Flüssigkeitssammelbehälter und der Sedimentsammelbehälter sind insbesondere durch eine Trennwand voneinander getrennt.

Damit die in den Flüssigkeitssammelbehälter gelangte aufzukonzentrierende Lösung zumindest teilweise wieder zur Aufkonzentration verwendet werden kann, ist in einer Ausgestaltung der Flüssigkeitssammelbehälter mit dem wenigstens einen die aufzukonzentrierende Lösung führenden Strömungskanal verbunden.

Um größere Volumenströme abarbeiten zu können, umfasst die Kristallisationsvorrichtung vorteilhafterweise mehrere zueinander parallele die aufzukonzentrierende Lösung führende Strömungskanäle, mehrere zueinander parallele den Heizdampf oder die Heizflüssigkeit führende Strömungskanäle sowie mehrere zueinander parallele das dampfförmige Lösungsmittel führende Strömungskanäle. Bei einem vorgegebenen Volumenstrom kann über die Anzahl der parallel geschalteten Strömungskanäle die Strömungsgeschwindigkeit der aufzukonzentrierenden Lösung eingestellt und damit auch die Kinetik der Kristallisation beeinflusst werden.

Dabei sind vorteilhafterweise wenigstens einem der den Heizdampf oder die Heizflüssigkeit führenden Strömungskanäle zwei die aufzukonzentrierende Lösung führende Strömungskanäle zugeordnet. Die beiden die aufzukonzentrierende Lösung führenden Strömungskanäle können auf gegenüberliegenden Seiten des jeweiligen den Heizdampf oder die Heizflüssigkeit führenden Strömungskanals angeordnet sein. Zwischen den jeweiligen den Heizdampf oder die Heizflüssigkeit bzw. die aufzukonzentrierende Lösung führenden Strömungskanälen ist jeweils eine dampf- und flüssigkeitsdichte Wand angeordnet.

Des Weiteren sind vorteilhafterweise wenigstens einem der das dampfförmige Lösungsmittel führenden Strömungskanäle zwei die aufzukonzentrierende Lösung führende Strömungskanäle zugeordnet. Die beiden die aufzukonzentrierende Lösung führenden Strömungskanäle können auf gegenüberliegenden Seiten des jeweiligen das dampfförmige Lösungsmittel führenden Strömungskanals angeordnet sein. Zwischen den jeweiligen das dampfförmige Lösungsmittel bzw. die aufzukonzentrierende Lösung führenden Strömungskanälen ist jeweils eine dampfdurchlässige, flüssigkeitsdichte Membranwand angeordnet.

Durch die vorstehend beschriebenen Maßnahmen kann die Anzahl der den Heizdampf oder die Heizflüssigkeit führenden Strömungskanäle sowie der das dampfförmige Lösungsmittel führenden Strömungskanäle reduziert werden.

Es kann vorgesehen sein, dass die Kristallisationsvorrichtung mehrere hintereinander geschaltete Stufen aufweist, wobei jede Stufe wenigstens einen die aufzukonzentrierende Lösung führenden Strömungskanal, wenigstens einen den Heizdampf oder die Heizflüssigkeit führenden Strömungskanal und wenigstens einen das dampfförmige Lösungsmittel führenden Strömungskanal aufweist. Dabei ist der wenigstens eine das dampfförmige Lösungsmittel führende Strömungskanal einer der Stufen mit dem wenigstens einen den Heizdampf oder die Heizflüssigkeit führenden Strömungskanal der nachfolgenden Stufe verbunden. Dampf, der sich in dem wenigstens einen das dampfförmige Lösungsmittel führenden Strömungskanal der einen Stufe bildet, wird als Heizdampf in der nachfolgenden Stufe zur Erwärmung der aufzukonzentrierenden Lösung verwendet. Sofern eine Heizflüssigkeit in einer mehrstufigen Kristallisationsvorrichtung verwendet wird, wird vorzugsweise nur die erste Stufe mit der Heizflüssigkeit beheizt. Die nachfolgenden Stufen werden mit Heizdampf, der sich insbesondere in der jeweils vorangegangenen Stufe gebildet hat, beheizt.

Gemäß einer bevorzugten Ausgestaltung ist zwischen benachbarten Stufen jeweils eine Umlenkeinheit angeordnet, die die aufzukonzentrierende Lösung derart umlenkt, dass die aufzukonzentrierende Lösung von unten in die der Umlenkeinheit nachfolgende Stufe eintritt.

Ein bevorzugte Ausgestaltung sieht vor, dass das erfindungsgemäße System einen Verdichter, beispielsweise einen Brüdenverdichter oder eine Dampfstrahlpumpe, umfasst. Ein Eingang des Verdichters ist mit einem Auslass des wenigstens einen das dampfförmige Lösungsmittel führenden Strömungskanals verbunden und ein Ausgang des Verdichters ist mit einem Einlass des wenigstens einen den Heizdampf führenden Strömungskanals verbunden. Dem Verdichter wird somit das aus dem wenigstens einen das dampfförmige Lösungsmittel führenden Strömungskanal strömende dampfförmige Lösungsmittel zugeführt, dessen Temperatur und Druck von dem Verdichter erhöht werden. Der so erzeugte Heizdampf wird anschließend dem wenigstens einen den Heizdampf führenden Strömungskanal zugeführt. Bei der Verwendung eines Verdichters wird die Kristallisationsvorrichtung auf der Druckseite nur mit einem Heizdampf und nicht mit einer Heizflüssigkeit beheizt.

Die oben beschriebene Aufgabenstellung wird des Weiteren gelöst durch ein Verfahren zur Kristallisation eines in einem Lösungsmittel gelösten auszukristallisierenden Stoffs, wobei eine aufzukonzentrierende Lösung, die das Lösungsmittel mit dem darin gelösten auszukristallisierenden Stoff aufweist, ein Heizdampf oder eine Heizflüssigkeit und dampfförmiges Lösungsmittel durch jeweilige Strömungskanäle geführt werden. Ein jeweiliger die aufzukonzentrierende Lösung führender Strömungskanal ist von einem jeweiligen den Heizdampf oder die Heizflüssigkeit führenden Strömungskanal zumindest teilweise durch eine dampfdichte und flüssigkeitsdichte Wand getrennt. Ferner ist ein jeweiliger die aufzukonzentrierende Lösung führender Strömungskanal von einem jeweiligen das dampfförmige Lösungsmittel führenden Strömungskanal zumindest teilweise durch eine für das dampfförmige Lösungsmittel, nicht jedoch für das flüssige Lösungsmittel durchlässige Membranwand getrennt. Die aufzukonzentrierende Lösung siedet in dem jeweiligen die aufzukonzentrierende Lösung führenden Strömungskanal und das beim Sieden erzeugte dampfförmige Lösungsmittel gelangt durch die Membranwand hindurch in den angrenzenden, das dampfförmige Lösungsmittel führenden Strömungskanal. Ein jeweiliger die aufzukonzentrierende Lösung führender Strömungskanal weist eine Breite von mindestens 3 mm auf. Sediment wird in einem Sedimentsammelbehälter, der sich unten an einen jeweiligen die aufzukonzentrierende Lösung führenden Strömungskanal anschließt, aufgefangen.

Die Erfindung wird nachfolgend anhand von Ausführungsbeispielen unter Bezug auf die Zeichnungen näher erläutert. In diesen zeigen:
- Figur 1: eine schematische Darstellung einer beispielhaften Ausführungsform eines Systems zur Kristallisation eines in einem Lösungsmittel gelösten auszukristallisierenden Stoffs mit einem Vorkristallisator, einem Nachkristallisator, einem Separator sowie einem Kühler;
- Figur 2: eine schematische Darstellung einer beispielhaften Ausführungsform eines Vorkristallisators mit einem die aufzukonzentrierende Lösung führenden Strömungskanal, einem den Heizdampf führenden Strömungskanal und einem das dampfförmige Lösungsmittel führenden Strömungskanal;
- Figur 3: eine schematische Darstellung einer beispielhaften Ausführungsform eines Vorkristallisators mit einem sich unten an den das dampfförmige Lösungsmittel führenden Strömungskanal anschließenden Flüssigkeitssammelbehälter;
- Figur 4: eine schematische Darstellung einer beispielhaften Ausführungsform eines einstufigen Vorkristallisators mit mehreren parallelen Strömungskanälen;
- Figur 5: eine schematische Darstellung einer beispielhaften Ausführungsform eines zweistufigen Vorkristallisators mit mehreren parallelen Strömungskanälen in einer Draufsicht;
- Figur 6: eine schematische Darstellung einer beispielhaften Ausführungsform eines zweistufigen Vorkristallisators mit mehreren parallelen Strömungskanälen in einer Seitenansicht;
- Figur 7: eine schematische Darstellung einer beispielhaften Ausführungsform eines Systems zur Kristallisation eines in einem Lösungsmittel gelösten auszukristallisierenden Stoffs mit einem Vorkristallisator, einem Nachkristallisator, einem Separator sowie einem Kühler;
- Figur 8: eine schematische Darstellung einer beispielhaften Ausführungsform eines Systems zur Kristallisation eines in einem Lösungsmittel gelösten auszukristallisierenden Stoffs mit einem Vorkristallisator und einem mechanischen Verdichter;
- Figur 9: eine schematische Darstellung einer beispielhaften Ausführungsform eines Systems zur Kristallisation eines in einem Lösungsmittel gelösten auszukristallisierenden Stoffs mit einem Vorkristallisator und einem thermischen Verdichter;
- Figur 10: eine schematische Darstellung einer beispielhaften Ausführungsform eines Vorkristallisators mit einem Volumen zum Sammeln von aufzukonzentrierenden Lösung in einer Draufsicht; und
- Figur 11: eine schematische Darstellung einer beispielhaften Ausführungsform eines Vorkristallisators mit einem Volumen zum Sammeln von aufzukonzentrierenden Lösung in einer Seitenansicht.

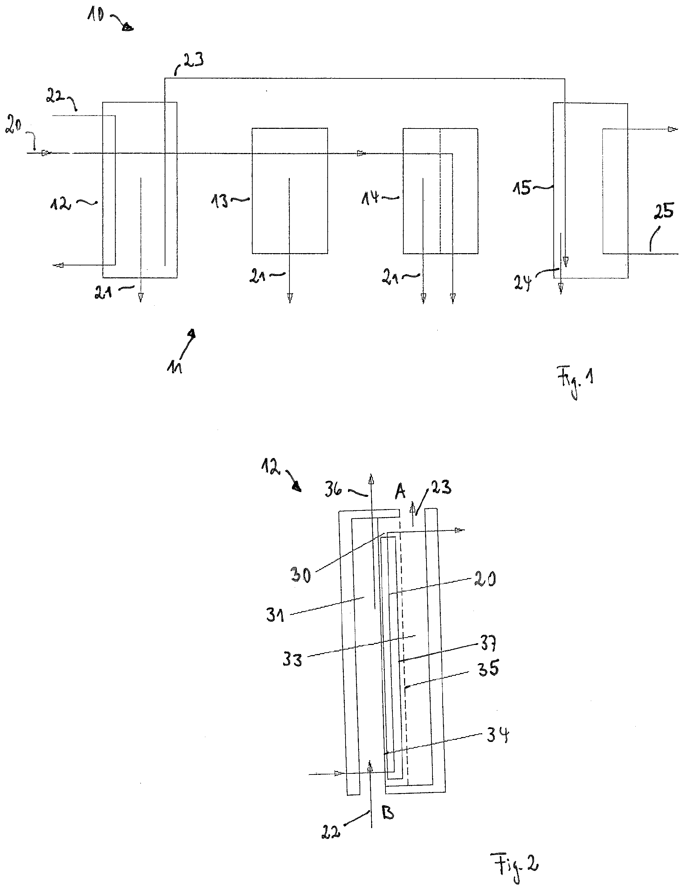

Figur 1 zeigt in schematischer Darstellung eine beispielhafte Ausführungsform eines Systems 10 zur Kristallisation eines in einem Lösungsmittel gelösten auszukristallisierenden Stoffs. Dabei kann es sich bei dem Lösungsmittel beispielsweise um Wasser und bei dem darin gelösten Stoff beispielsweise um ein Salz handeln.

Das System 10 besteht aus einer Kristallisationsvorrichtung 11, die einen beheizten Vorkristallisator 12, einen Nachkristallisator 13 und einen Separator 14 umfasst, sowie einem Kühler 15. Eine aufzukonzentrierende Lösung 20, die das Lösungsmittel mit dem darin gelösten auszukristallisierenden Stoff enthält, wird durch den Vorkristallisator 12, den Nachkristallisator 13 und den Separator 14 geführt. Dabei wird eine Kristallisation des in der aufzukonzentrierenden Lösung 20 gelösten Stoffs durch Konzentrationserhöhung im Vorkristallisator 12 und Abkühlung im Nachkristallisator 13 erreicht. Die entstehenden Kristalle 21 werden im Vorkristallisator 12, im Nachkristallisator 13 und im Separator 14 abgetrennt.

Der Vorkristallisator 12 wird mittels eines Heizdampfs 22 oder einer Heizflüssigkeit beheizt. Während des Betriebs des Systems 10 wird - wie nachfolgend detailliert erläutert wird - ein Teil des Lösungsmittels im Vorkristallisator 12 verdampft. Dabei entstehendes dampfförmiges Lösungsmittel 23 wird dem Kühler 15 zugeführt, in dem es kondensiert und als Kondensat 24 abgeführt wird. Der Kühler 15 wird von einem Kühlmedium 25 durchströmt.

Figur 2 zeigt in Draufsicht eine schematische Darstellung einer beispielhaften Ausführungsform eines Vorkristallisators 12.

Der Vorkristallisator 12 umfasst einen die aufzukonzentrierende Lösung 20 führenden Strömungskanal 30, einen den Heizdampf 22 führenden Strömungskanal 31 und einen das dampfförmige Lösungsmittel 23 führenden Strömungskanal 33. Anstelle des Heizdampfs 22 kann auch eine Heizflüssigkeit verwendet werden. Ferner enthält der Vorkristallisator 12 eine dampfdichte und flüssigkeitsdichte Wand 34 sowie eine für das dampfförmige Lösungsmittel 23, nicht jedoch für das flüssige Lösungsmittel durchlässige Membranwand 35.

Der die aufzukonzentrierende Lösung 20 führende Strömungskanal 30 und der den Heizdampf 22 führende Strömungskanal 31 sind benachbart zueinander angeordnet und zumindest teilweise durch die dampfdichte und flüssigkeitsdichte Wand 34 voneinander getrennt. Zudem grenzen die Strömungskanäle 30 und 31 unmittelbar an gegenüberliegende Seiten der Wand 34 an.

Der die aufzukonzentrierende Lösung 20 führende Strömungskanal 30 und der das dampfförmige Lösungsmittel 23 führende Strömungskanal 33 sind benachbart zueinander angeordnet und zumindest teilweise durch die flüssigkeitsdichte und dampfdurchlässige Membranwand 35 voneinander getrennt. Zudem grenzen die Strömungskanäle 30 und 33 unmittelbar an gegenüberliegende Seiten der Membranwand 35 an.

Ferner befinden sich die Wand 34 und die Membranwand 35 auf gegenüberliegenden Seiten des die aufzukonzentrierende Lösung 20 führenden Strömungskanals 30.

Der Heizdampf 22 tritt an einer Stelle B in den Vorkristallisator 12 ein und überträgt durch die wärmeleitende Wand 34 Energie auf die durch den Strömungskanal 30 strömende aufzukonzentrierende Lösung 20, wodurch die aufzukonzentrierende Lösung 20 erwärmt wird und schließlich siedet. Um das Sieden der aufzukonzentrierenden Lösung 20 im Strömungskanal 30 bei der durch den Heizdampf 22 bewirkten Temperatur zu erzielen, wird beispielsweise der hydrostatische Druck der aufzukonzentrierenden Lösung 20 so weit abgesenkt, dass der der Temperatur der aufzukonzentrierenden Lösung 20 entsprechende Siededruck erreicht wird.

Sofern der die aufzukonzentrierende Lösung 20 führende Strömungskanal 30 vertikal angeordnet ist, erfolgt das Sieden der aufzukonzentrierenden Lösung 20, wie im Folgenden erläutert ist.

Der auf einer Seite von der dampfdichten und flüssigkeitsdichten Wand 34 und auf der anderen Seite von der flüssigkeitsdichten und dampfdurchlässigen Membranwand 35 begrenzte Strömungskanal 30 hat bei einer technischen Ausführung stets eine Mindesthöhe. Der hydrostatische Druck der aufzukonzentrierenden Lösung 20 verringert sich, wenn im Strömungskanal 30 von oben beginnend Sieden stattfindet. Durch das Sieden verändert sich das spezifische Gewicht der aufzukonzentrierenden Lösung 20 und das Sieden setzt sich im Strömungskanal 30 vertikal nach unten fort.

Ohne weitere Maßnahmen würde sich die aufzukonzentrierende Lösung 20 durch das Verdampfen des Lösungsmittels abkühlen und der Druck im Strömungskanal 30 müsste, um das Sieden aufrechtzuerhalten, immer weiter abgesenkt werden. Da jedoch über den Strömungskanal 31, der über die dampfdichte, flüssigkeitsdichte Wand 34 dem die aufzukonzentrierende Lösung 20 führenden Strömungskanal 30 benachbart ist, Heizdampf 22 nachströmen und an der dampfdichten, flüssigkeitsdichten Wand 34 kondensieren kann, kühlt sich die aufzukonzentrierende Lösung 20 im Strömungskanal 30 nicht ab. Der im die aufzukonzentrierende Lösung 20 führenden Strömungskanal 30 entstehende Dampf kann über die der dampfdichten, flüssigkeitsdichten Wand 34 gegenüberliegende flüssigkeitsdichte, dampfdurchlässige Membranwand 35 in den Strömungskanal 33, der sich an die Membranwand 35 anschließt, strömen. Das dampfförmige Lösungsmittel 23 verlässt den Vorkristallisator 12 an einer Stelle A. Das im Strömungskanal 31 durch Kondensation des Heizdampfs 22 erzeugte Kondensat 36 wird über einen geeigneten Strömungskanal aus dem Vorkristallisator 12 herausgeführt.

Der vom dampfförmigen Lösungsmittel 23 durchströmte Strömungskanal 33 befindet sich auf einem niedrigeren Druck als der den Heizdampf 22 führende Strömungskanal 31. Vorzugsweise ist der Druck im Strömungskanal 33 gleich dem Siededruck der über die Membranwand 35 benachbarten aufzukonzentrierenden Lösung 20 abzüglich des durch die Membranwand 35 verursachten Druckverlusts. Kommt es jetzt durch zunehmende Aufkonzentration der aufzukonzentrierenden Lösung 20 zur Kristallisation, werden die Kristalle durch das Sieden in Bewegung gehalten. Das Sieden der Lösung führt dazu, dass sich die dampfdichte, flüssigkeitsdichte Wand 34 und die flüssigkeitsdichte, dampfdurchlässige Membranwand 35 bewegen und Kristalle, die sich an den Oberflächen gebildet haben, entfernt werden oder weniger fest haften.

Der Strömungskanal 30 für die aufzukonzentrierende Lösung 20 weist an seiner Unterseite zumindest teilweise eine Öffnung auf, an diese sich ein Sedimentsammelbehälter 37 anschließt. Die bei der Kristallisation entstehenden Kristalle können in den Sedimentsammelbehälter 37 hinein sedimentieren. Der Sedimentsammelbehälter 37 ist mit der aufzukonzentrierenden Lösung 20 gefüllt, wird jedoch nicht von der aufzukonzentrierenden Lösung 20 durchströmt.

Die Membranwand 35 kann beispielsweise aus mikroporösen, hydrophoben Stoffen, zum Beispiel aus Polytetrafluorethylen, Polypropylen, Polyethylen oder Polyvinylidenfluorid hergestellt sein.

Der die aufzukonzentrierende Lösung 20 führende Strömungskanal 30 weist eine Breite im Bereich von 2 mm bis 10 mm auf. Die Breite des Strömungskanal 30 ist in der in Figur 2 dargestellten Ausführungsform des Vorkristallisators 12 durch den Abstand der dampfdichten, flüssigkeitsdichten Wand 34 von der flüssigkeitsdichten, dampfdurchlässigen Membranwand 35 definiert.

Für den zu- und/oder abströmenden Heizdampf 22 sowie das dampfförmige Lösungsmittel 23 in den Strömungskanälen 31 bzw. 33 sind verschiedene Strömungsrichtungen möglich. Der Heizdampf 22 und das dampfförmige Lösungsmittel 23 können vertikal oder horizontal durch die Strömungskanälen 31 bzw. 33 strömen. Die aufzukonzentrierende Lösung 20 kann horizontal, vertikal oder diagonal durch den Strömungskanal 30 strömen. Dadurch ergeben sich verschiedene Schaltungsmöglichkeiten, wie in welcher Richtung die aufzukonzentrierende Lösung 20, der Heizdampf 22 und das dampfförmige Lösungsmittel 23 zueinander strömen.

Eine Möglichkeit, Sieden im Strömungskanal 30 zu erzeugen, ist es, den Zu- und Abfluss der aufzukonzentrierenden Lösung 20 in den Strömungskanal 30 für die aufzukonzentrierende Lösung 20 zu kontrollieren. Strömt die aufzukonzentrierende Lösung 20 im Strömungskanal 30 von unten nach oben, dann kann der Zu- und Abfluss der aufzukonzentrierenden Lösung 20 in den und aus dem Strömungskanal 30 über passive Elemente wie Drosseln oder aktive Elemente wie Ventile über eine Querschnittsänderung der Leitung, in der die aufzukonzentrierende Lösung 20 strömt, erreicht werden.

Wandelt sich das Lösungsmittel der aufzukonzentrierenden Lösung 20 beim Sieden in Dampf um, dann findet zum Beispiel bei Wasser eine Volumenzunahme bei Umgebungsdruck um drei Größenordnungen statt. Der beim Phasenwechsel entstehende Dampf wird nun durch die für den Transport der flüssigen aufzukonzentrierenden Lösung 20 ausgelegte Leitung abströmen wollen. Diese Leitung hat für die Dampfströmung einen zu kleinen Querschnitt und damit auch einen zu hohen Druckverlust. Übersteigt der Druckverlust den Druckverlust, den die flüssigkeitsdichte, dampfdurchlässige Membranwand 35 bei der Dampfdurchströmung verursacht, dann strömt der beim Sieden der aufzukonzentrierenden Lösung 20 erzeugte Dampf in den Strömungskanal 33, der für das dampfförmige Lösungsmittel 23 vorgesehen ist.

Dem Vorkristallisator 12 strömt frische aufzukonzentrierende Lösung 20 zu. Wird der Vorkristallisator 12 im Unterdruck und bei einer Temperaturerhöhung der aufzukonzentrierenden Lösung 20 betrieben, werden aus der aufzukonzentrierenden Lösung 20 nicht kondensierbare Gase frei. Diese Gase sind aus dem System 10 zu entfernen.

Die Kristallisationsvorrichtung 11 kann im Unter- oder Überdruck betrieben werden. Um die Kristallisationsvorrichtung 11 vom außerhalb der Kristallisationsvorrichtung 11 herrschenden Umgebungsdruck abzutrennen, sind dem Fachmann bekannte Maßnahmen zu treffen, wie zum Beispiel der Einsatz von Pumpen, Gehäusen und Ventilen in den Zu- und Ableitungen.

Die Strömung der aufzukonzentrierenden Lösung 20 und des Heizdampfs 22 in den Strömungskanälen 30 bzw. 31 kann mit den dem Fachmann bekannten Mitteln, wie zum Beispiel Pumpen, erzeugt werden. Über die Pumpen kann die jeweilige Strömungsgeschwindigkeit eingestellt werden.

Die aufzukonzentrierende Lösung 20 kann bereits beim Eintritt in den Strömungskanal 30 des Vorkristallisators 12 eine Konzentration des auszukristallisierenden Stoffs nahe der Sättigung aufweisen. Durch die Verringerung des Lösungsmittels in der aufzukonzentrierenden Lösung 20 steigt die Konzentration des auszukristallisierenden Stoffs im Strömungskanal 30, wodurch letztlich Sättigung und Übersättigung erreicht werden und es zu Keimbildung und Kristallwachstum kommt.

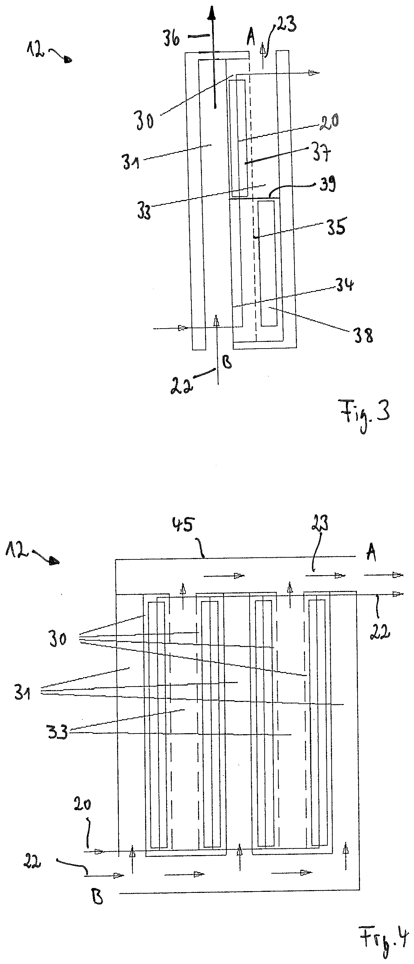

Figur 3 zeigt in schematischer Darstellung eine beispielhafte Ausführungsform eines Vorkristallisators 10. Im Unterschied zu dem in Figur 2 dargestellten Vorkristallisator 10 ist in Figur 3 unten an den das dampfförmige Lösungsmittel 23 führenden Strömungskanal 33 ein Flüssigkeitssammelbehälter 38 angebracht. In dem Flüssigkeitssammelbehälter 38 sammelt sich die aufzukonzentrierende Lösung 20, die durch Leckage in flüssiger Form durch die. Membranwand 35 von dem Strömungskanal 30 in den Strömungskanal 33 gelangt ist.

Die sich unten an die Strömungskanäle 30 und 33 anschließenden Sediment- und Flüssigkeitssammelbehälter 37, 38 sind durch eine Trennwand 39 voneinander getrennt.

Figur 4 zeigt in schematischer Darstellung eine beispielhafte Ausführungsform eines Vorkristallisators 12, der aus einer Stufe 45 besteht. Die Stufe 45 umfasst mehrere zueinander parallele die aufzukonzentrierende Lösung 20 führende Strömungskanäle 30, mehrere zueinander parallele den Heizdampf 22 führende Strömungskanäle 31 sowie mehrere zueinander parallele das dampfförmige Lösungsmittel 23 führende Strömungskanäle 33. In der Ausführungsform nach Figur 4 umfasst die Stufe 45 vier Strömungskanäle 30, drei Strömungskanäle 31 und zwei Strömungskanäle 33. Alternativ kann aber auch eine andere Anzahl von Strömungskanälen 30, 31 und 33 vorgesehen sein. Durch die Parallelschaltung der Strömungskanäle 30, 31 und 33 wird die Kapazität des Vorkristallisators 12 vergrößert.

Die Strömungskanäle 30, 31 und 33 sind in der Stufe 45 derart angeordnet, dass die Zahl der den Heizdampf 22 und das dampfförmige Lösungsmittel 23 führenden Strömungskanäle 31 und 33 möglichst gering ist. Dem Mittleren der den Heizdampf 22 führenden Strömungskanäle 31 sind zwei die aufzukonzentrierende Lösung 20 führende Strömungskanäle 30 zugeordnet, die auf gegenüberliegenden Seiten des mittleren Strömungskanals 31 angeordnet sind und von dem mittleren Strömungskanal 31 jeweils durch eine dampfdichte und flüssigkeitsdichte Wand 34 getrennt sind.

Ferner sind den das dampfförmige Lösungsmittel 23 führenden Strömungskanälen 33 jeweils zwei die aufzukonzentrierende Lösung 20 führende Strömungskanäle 30 zugeordnet, die auf gegenüberliegenden Seiten des jeweiligen Strömungskanals 33 angeordnet sind und von dem Strömungskanal 33 jeweils durch eine flüssigkeitsdichte und dampfdurchlässige Membranwand 35 getrennt sind.

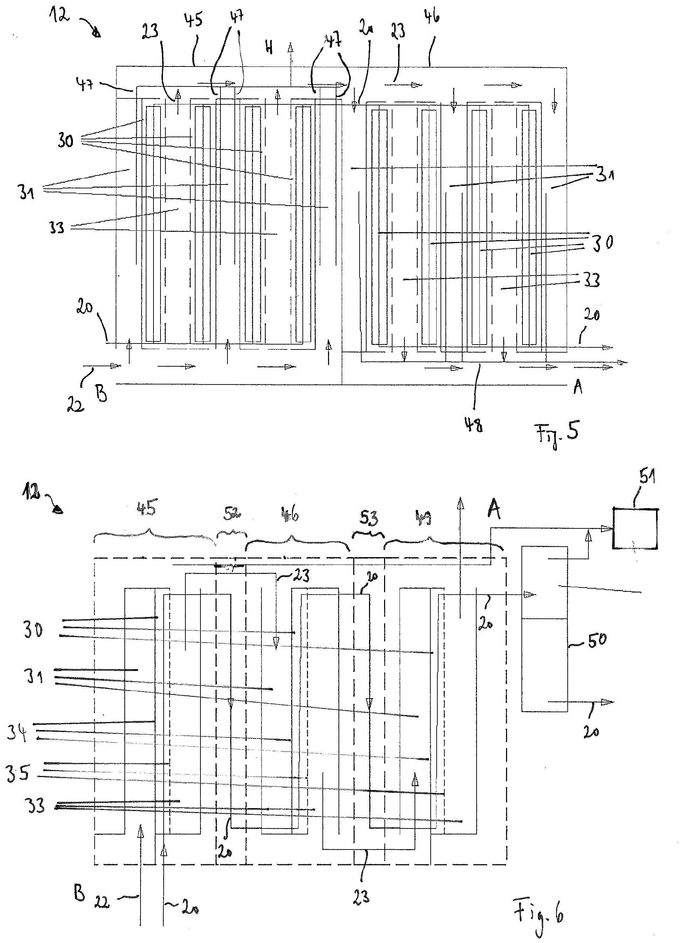

Figur 5 zeigt in schematischer Darstellung eine beispielhafte Ausführungsform eines Vorkristallisators 12, der aus einer Stufe 45 und einer der Stufe 45 nachgeschalteten Stufe 46 besteht. Die Stufe 45 entspricht der in Figur 4 gezeigten Stufe 45. Zusätzlich enthält die Stufe 45 noch Strömungskanäle 47, die das sich in den Strömungskanälen 31 der Stufe 45 bildende Kondensat des Heizdampfs 22 an einer Stelle H aus der Stufe 45 abführen.

Die Stufe 46 ist mit mehreren zueinander parallelen Strömungskanälen 30, 31 und 33 ähnlich aufgebaut wie die Stufe 45. Dabei sind die Strömungskanäle 31 der Stufe 46 mit den Strömungskanälen 33 der Stufe 45 verbunden. Somit dient das in der Stufe 45 erzeugte dampfförmige Lösungsmittel 23 in der Stufe 46 zur Erwärmung der aufzukonzentrierenden Lösung 20 in den Strömungskanäle 30. Das in der Stufe 45 erzeugte dampfförmige Lösungsmittel 23 kondensiert in den Strömungskanälen 31 der Stufe 46 und verlässt die Stufe 46 als Kondensat über Strömungskanäle 48.

Die aufzukonzentrierende Lösung 20 durchläuft zunächst die Strömungskanäle 30 der Stufe 45 und anschließend die Strömungskanäle 30 der Stufe 46. Durch das Hintereinanderschalten der Stufen 45 und 46 addieren sich die Strömungskanäle 30 in der Länge und die für die Sedimentation benötigten Strömungslängen können auf einfache Weise erreicht werden.

Figur 6 zeigt in einer Seitenansicht eine schematische Darstellung einer beispielhaften Ausführungsform eines Vorkristallisators 12, der eine Stufe 45 und eine der Stufe 45 nachgeschaltete Stufe 46 sowie eine der Stufe 46 nachgeschaltete Stufe 49 aufweist. Zwischen jeweils benachbarten Stufen 45, 46 und 49, d. h. zwischen den Stufen 45 und 46 sowie zwischen den Stufen 46 und 49, ist jeweils eine Umlenkeinheit 52 bzw. 53 angeordnet. Die aufzukonzentrierende Lösung 20 tritt von unten in die Stufe 45 ein und wird dort mittels des in den Strömungskanal 31 geleiteten Heizdampfs 22 zum Sieden gebracht. Das dabei entstehende dampfförmige Lösungsmittel 23 tritt durch die Membranwand 35 der Stufe 45 und gelangt in den Strömungskanal 33 der Stufe 45. Vom Strömungskanal 33 der Stufe 45 wird das dampfförmige Lösungsmittel 23 in den Strömungskanal 31 der Stufe 46 geleitet, wo es kondensiert und die aufzukonzentrierende Lösung 20 im Strömungskanal 30 der Stufe 46 erwärmt.

Die aufzukonzentrierende Lösung 20 tritt nach dem Verlassen der Stufe 45 von oben in die Umlenkeinheit 52 ein. In der Umlenkeinheit 52 wird die aufzukonzentrierende Lösung 20 derart umgelenkt, dass sie von unten in die Stufe 46 eintritt. Die Stufe 46 ist im Prinzip genauso wie die Stufe 45 aufgebaut. Der Stufe 46 ist die Umlenkeinheit 53 nachgeschaltet, die den gleichen Aufbau wie die Umlenkeinheit 52 aufweist. Die stromabwärts der Umlenkeinheit 53 angeordnete Stufe 49 weist im Prinzip den gleichen Aufbau wie die Stufen 45 und 46 auf. Es ist denkbar, hinter der Stufe 49 abwechselnd weitere Umlenkeinheiten und Stufen anzuordnen.

Die Durchströmung der aufzukonzentrierenden Lösung 20 in den Strömungskanälen 30 kann diagonal von unten nach oben erfolgen.

Ferner ist ein Behälter 50 vorgesehen, in den die aufzukonzentrierende Lösung 20 nach Verlassen der Stufe 49 strömt. Über den Behälter 50 ist die aufzukonzentrierende Lösung 20 in ein Vakuumsystem 51 eingebunden, das dazu dient, den der Temperatur der aufzukonzentrierenden Lösung 20 in den Strömungskanälen 30 entsprechenden Siededruck einzustellen.

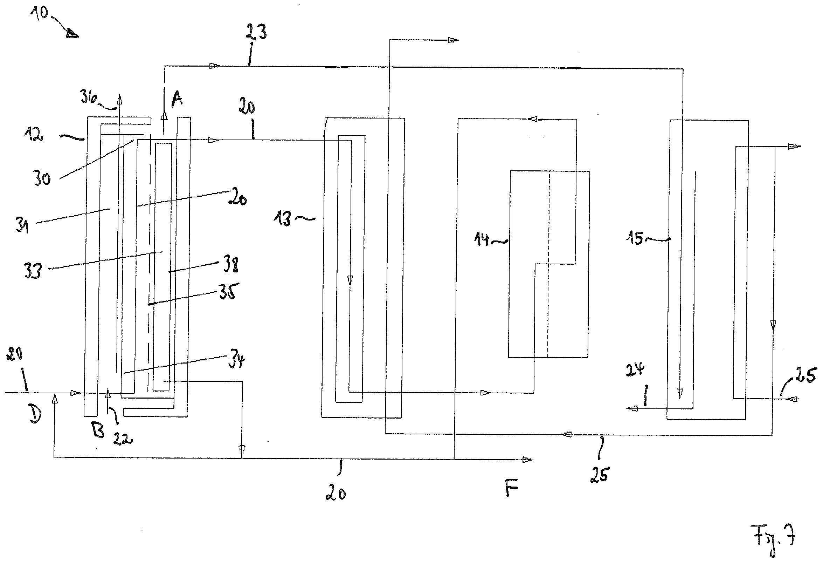

Figur 7 zeigt in schematischer Darstellung eine beispielhafte Ausführungsform eines Systems 10 zur Kristallisation eines in einem Lösungsmittel gelösten auszukristallisierenden Stoffs. Das System 10 entspricht im Wesentlichen dem in Figur 1 gezeigten System 10 und besteht aus einem Vorkristallisator 12, einem Nachkristallisator 13, einem Separator 14 sowie einem Kühler 15. Der Vorkristallisator 12 ist in dem in Figur 7 dargestellten System 10 durch den aus Figur 2 bekannten Vorkristallisator 12 realisiert.

Ferner enthält der Vorkristallisator 12 in Figur 7 einen Flüssigkeitssammelbehälter 38, in dem sich die aufzukonzentrierende Lösung 20 sammelt, die durch Leckage in flüssiger Form durch die Membranwand 35 von dem Strömungskanal 30 in den Strömungskanal 33 gelangt ist. Die in dem Flüssigkeitssammelbehälter 38 angesammelte aufzukonzentrierende Lösung 30 kann an einer Stelle D zum Teil wieder dem Strömungskanal 30 des Vorkristallisators 12 zugeführt werden, kann aber auch an einer Stelle F zumindest teilweise aus dem System 10 abgeleitet werden.

Das im Vorkristallisator 12 entstehende dampfförmige Lösungsmittel 23 wird in den Kühler 15 geführt und kondensiert dort. Dazu wird der Kühler 15 von einem Kühlmedium 25 durchströmt. Nach Austritt aus dem Kühler 15 wird zumindest ein Teil des erwärmten Kühlmediums 25 in den Nachkristallisator 13 geleitet. Dort wird die aus dem Vorkristallisator 12 herausströmende aufzukonzentrierende Lösung 20 mit Hilfe des Kühlmediums 25 gekühlt. Da die Löslichkeit des in der aufzukonzentrierenden Lösung 20 gelösten Stoffs temperaturabhängig ist, wird durch die Kühlung der aufzukonzentrierenden Lösung 20 im Nachkristallisator 13 eine weitere Kristallisation erzeugt.

Vom Nachkristallisator 13 gelangt die aufzukonzentrierende Lösung 20 in den Separator 14, der beispielsweise ein Filter, ein feinmaschiges Sieb oder ein Zyklon enthält, mit dem sich der aufzukonzentrierenden Lösung 20 weitere Kristalle entnehmen lassen.

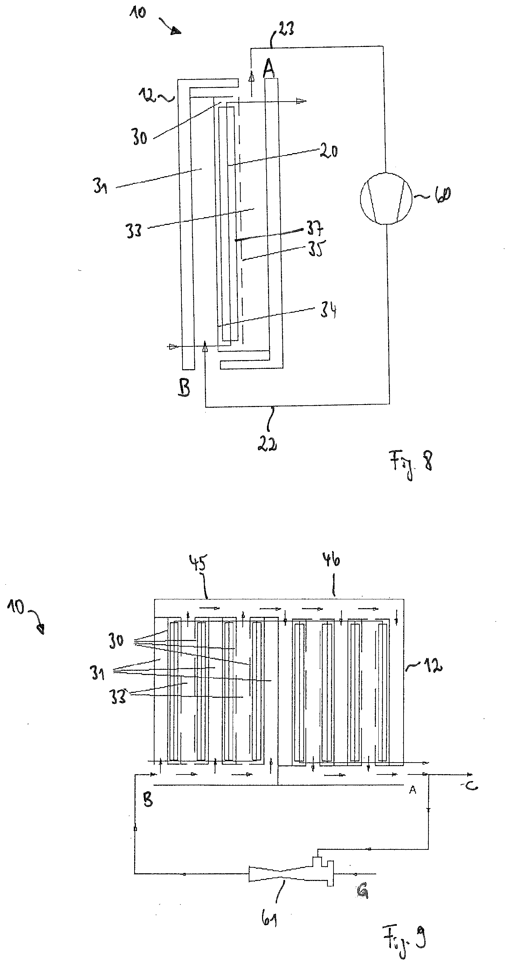

Figur 8 zeigt in schematischer Darstellung eine beispielhafte Ausführungsform eines Systems 10 zur Kristallisation eines in einem Lösungsmittel gelösten auszukristallisierenden Stoffs mit einem Vorkristallisator 12, wie er in Figur 2 gezeigt ist. Im Unterschied zum System 10 aus Figur 7 enthält das in Figur 8 gezeigte System 10 keinen Kühler. Stattdessen wird das im Vorkristallisator 12 erzeugte dampfförmige Lösungsmittel 23 einem mechanischen Verdichter 60, beispielsweise einem Brüdenverdichter, zugeführt. Der Verdichter 60 erhöht die Temperatur und den Druck des dampfförmigen Lösungsmittels 23 und führt das erhitzte und verdichtete dampfförmige Lösungsmittel als Heizdampf 22 dem Strömungskanal 31 des Vorkristallisators 12 zu.

Anstelle eines einstufigen Vorkristallisators 12 kann in dem in Figur 8 gezeigten System 10 auch ein mehrstufiger Vorkristallisator, wie er zum Beispiel in Figur 5 oder 6 gezeigt ist, eingesetzt werden.

Figur 9 zeigt in schematischer Darstellung eine beispielhafte Ausführungsform eines Systems 10 zur Kristallisation eines in einem Lösungsmittel gelösten auszukristallisierenden Stoffs mit einem mehrstufigen Vorkristallisator 12, wie er in Figur 5 gezeigt ist. Hier ist der Auslass des Vorkristallisators 12 an der Stelle A mit dem Einlass des Vorkristallisators an der Stelle B über einen thermischen Verdichter, beispielsweise einen Dampfstrahlverdichter 61 (TVR; Thermal Vapor Recompression) verbunden, der die Temperatur und den Druck des Dampfs erhöht.

Über einen Auslass an einer Stelle C strömt ein Teil des Dampfs ab und wird zum Beispiel über einen nachgeschalteten Kondensator kondensiert. Dem Dampfstrahlverdichter 61 wird an einer Stelle G Treibdampf zugeführt.

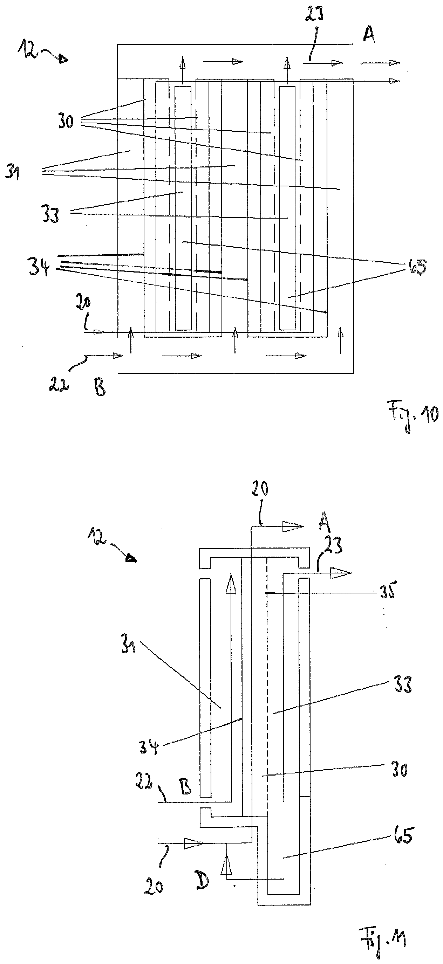

Figur 10 zeigt in schematischer Darstellung eine beispielhafte Ausführungsform eines Vorkristallisators 12, der ähnlich wie der in Figur 4 gezeigte Vorkristallisator 12 aufgebaut ist. Anders als in Figur 4 sind hier jedoch die von den Membranwänden 35 begrenzten und das dampfförmige Lösungsmittel 23 führenden Strömungskanäle 33 nach unten über Kanäle 65 offen und enden in einem abgeschlossenen Volumen. Die von den dampfdichten, flüssigkeitsdichten Wänden 34 begrenzten und den Heizdampf 22 führenden Strömungskanäle 31 sind in dem in Figur 10 dargestellten Vorkristallisator 12 nach unten geschlossen.

Falls es an einer der Membranwände 35 zu einer Leckage kommt, das heißt, die aufzukonzentrierende Lösung 20 passiert die Membranwand 35 in flüssigem Zustand, kann die aufzukonzentrierende Lösung 20 nach unten in die Kanäle 65 fließen, sich in dem nach unten anschließenden Volumen sammeln und wieder in die Strömungskanäle 30 zurückgeführt werden.

In der in Figur 10 gezeigten Ausgestaltung strömen beispielhaft der in den Vorkristallisator 12 an der Stelle B eintretende Heizdampf 22 und das aus dem Vorkristallisator 12 an der Stelle A austretende dampfförmige Lösungsmittel 23 vertikal. Die aufzukonzentrierende Lösung 20 strömt in dieser Ausgestaltung ebenfalls vertikal. Das an den dampfdichten, flüssigkeitsdichten Wänden 34 sich bildende Kondensat wird aus den Strömungskanälen 31 horizontal nach außen abgeführt.

Figur 11 zeigt die Ausführungsform des Vorkristallisators 12 nach Figur 10 in der Seitenansicht. Vom Strömungskanal 33 aus erstreckt sich der Kanal 65 nach unten. Die aus einer Leckage kommende, in den Strömungskanal 33 strömende aufzukonzentrierende Lösung 20 kann durch den Kanal 65 in das Volumen fließen. An der Stelle D kann die im Volumen aus der Leckage kommende gesammelte aufzukonzentrierende Lösung 20 der in den Vorkristallisator 12 strömenden aufzukonzentrierenden Lösung 20 hinzugefügt werden.

### Bezugszeichenliste

- 10: System
- 11: Kristallisationsvorrichtung
- 12: Vorkristallisator
- 13: Nachkristallisator
- 14: Separator
- 15: Kühler
- 20: aufzukonzentrierende Lösung
- 21: Kristalle
- 22: Heizdampf
- 23: dampfförmiges Lösungsmittel
- 24: Kondensat
- 25: Kühlmedium
- 30: Strömungskanal
- 31: Strömungskanal
- 33: Strömungskanal
- 34: Wand
- 35: Membranwand
- 36: Kondensat
- 37: Sedimentsammelbehälter
- 38: Flüssigkeitssammelbehälter
- 39: Trennwand
- 45: Stufe
- 46: Stufe
- 47: Strömungskanal
- 48: Strömungskanal
- 49: Stufe
- 50: Behälter
- 51: Vakuumsystem
- 52: Umlenkeinheit
- 53: Umlenkeinheit
- 60: Verdichter
- 61: Dampfstrahlverdichter
- 65: Kanal

## Patentansprüche

1. System (10) zur Kristallisation eines in einem Lösungsmittel gelösten auszukristallisierenden Stoffs, mit einer von einer aufzukonzentrierenden Lösung (20), die das Lösungsmittel mit dem darin gelösten auszukristallisierenden Stoff aufweist, und von einem Heizdampf (22) oder einer Heizflüssigkeit durchströmten Kristallisationsvorrichtung (11), wobei die Kristallisationsvorrichtung (11) wenigstens einen die aufzukonzentrierende Lösung (20) führenden Strömungskanal (30), wenigstens einen den Heizdampf (22) oder die Heizflüssigkeit führenden Strömungskanal (31) und wenigstens einen dampfförmiges Lösungsmittel (23) führenden Strömungskanal (33) aufweist, wobei ein jeweiliger die aufzukonzentrierende Lösung (20) führender Strömungskanal (30) von einem jeweiligen den Heizdampf (22) oder die Heizflüssigkeit führenden Strömungskanal (31) zumindest teilweise durch eine dampfdichte und flüssigkeitsdichte Wand (34) getrennt ist und der jeweilige die aufzukonzentrierende Lösung (20) führende Strömungskanal (30) von einem jeweiligen das dampfförmige Lösungsmittel (23) führenden Strömungskanal (33) zumindest teilweise durch eine für das dampfförmige Lösungsmittel, nicht jedoch für das flüssige Lösungsmittel durchlässige Membranwand (35) getrennt ist, wobei die Kristallisationsvorrichtung (11) derart ausgestaltet ist, dass die aufzukonzentrierende Lösung (20) in dem jeweiligen die aufzukonzentrierende Lösung (20) führenden Strömungskanal (30) siedet und beim Sieden erzeugtes dampfförmiges Lösungsmittel (23) durch die Membranwand (35) hindurch in den angrenzenden, das dampfförmige Lösungsmittel (23) führenden Strömungskanal (33) gelangt, **dadurch gekennzeichnet, dass** der jeweilige die aufzukonzentrierende Lösung (20) führender Strömungskanal (30) eine Breite von mindestens 3 mm aufweist und sich ein Sedimentsammelbehälter (37) unten an einen jeweiligen die aufzukonzentrierende Lösung (20) führenden Strömungskanal (30) anschließt.

2. System (10) nach Anspruch 1,
**dadurch gekennzeichnet, dass**
die Kristallisationsvorrichtung (11) bei einem Unter- oder Überdruck bezogen auf den Umgebungsdruck betrieben wird.

3. System (10) nach Anspruch 1 oder 2,
**dadurch gekennzeichnet, dass**
in dem wenigstens einen das dampfförmige Lösungsmittel (23) führenden Strömungskanal (33) ein niedrigerer Druck herrscht als in dem wenigstens einen den Heizdampf (22) oder die Heizflüssigkeit führenden Strömungskanal (31).

4. System (10) nach einem der vorhergehenden Ansprüche,
**dadurch gekennzeichnet, dass**
der die aufzukonzentrierende Lösung (20) führende Strömungskanal (30) eine Breite von nicht mehr als 10 mm aufweist.

5. System (10) nach einem der vorhergehenden Ansprüche,
**dadurch gekennzeichnet, dass**
der Sedimentsammelbehälter (37) mit der aufzukonzentrierenden Lösung (20) gefüllt, jedoch nicht von der aufzukonzentrierenden Lösung (20) durchströmt ist.

6. System (10) nach einem der vorhergehenden Ansprüche,
**dadurch gekennzeichnet, dass**
sich unten an einen jeweiligen das dampfförmige Lösungsmittel (23) führenden Strömungskanal (33) ein Flüssigkeitssammelbehälter (38) zur Sammlung der möglicherweise durch Leckage in den jeweiligen das dampfförmige Lösungsmittel (23) führenden Strömungskanal (33) gelangten aufzukonzentrierenden Lösung (20) anschließt, wobei der Flüssigkeitssammelbehälter (38) insbesondere von dem Sedimentsammelbehälter (37) durch eine Trennwand (39) getrennt ist.

7. System (10) nach Anspruch 6,
**dadurch gekennzeichnet, dass**
der Flüssigkeitssammelbehälter (38) mit dem wenigstens einen die aufzukonzentrierende Lösung (20) führenden Strömungskanal (30) verbunden ist, um die im Flüssigkeitssammelbehälter (38) befindliche aufzukonzentrierende Lösung (20) dem wenigstens einen die aufzukonzentrierende Lösung (20) führenden Strömungskanal (30) zumindest teilweise zuzuführen.

8. System (10) nach einem der vorhergehenden Ansprüche,
**dadurch gekennzeichnet, dass**
die Kristallisationsvorrichtung (11) mehrere zueinander parallele die aufzukonzentrierende Lösung (20) führende Strömungskanäle (30), mehrere zueinander parallele den Heizdampf (22) oder die Heizflüssigkeit führende Strömungskanäle (31) sowie mehrere zueinander parallele das dampfförmige Lösungsmittel (23) führende Strömungskanäle (33) umfasst, wobei insbesondere wenigstens einem der den Heizdampf (22) oder die Heizflüssigkeit führenden Strömungskanäle (31) zwei die aufzukonzentrierende Lösung (20) führende Strömungskanäle (30) zugeordnet sind, die auf gegenüberliegenden Seiten des jeweiligen den Heizdampf (22) oder die Heizflüssigkeit führenden Strömungskanals (31) angeordnet sind, und wenigstens einem der das dampfförmige Lösungsmittel (23) führenden Strömungskanäle (33) zwei die aufzukonzentrierende Lösung (20) führende Strömungskanäle (30) zugeordnet sind, die auf gegenüberliegenden Seiten des jeweiligen das dampfförmige Lösungsmittel (23) führenden Strömungskanals (33) angeordnet sind.

9. System (10) nach einem der vorhergehenden Ansprüche,
**dadurch gekennzeichnet, dass**
die Kristallisationsvorrichtung (11) mehrere hintereinander geschaltete Stufen (45, 46, 49) aufweist, wobei jede Stufe (45, 46, 49) wenigstens einen die aufzukonzentrierende Lösung (20) führenden Strömungskanal (30), wenigstens einen den Heizdampf (22) oder die Heizflüssigkeit führenden Strömungskanal (31) und wenigstens einen das dampfförmige Lösungsmittel (23) führenden Strömungskanal (33) aufweist und wobei der wenigstens eine das dampfförmige Lösungsmittel (23) führende Strömungskanal (33) einer der Stufen (45) mit dem wenigstens einen den Heizdampf (22) oder die Heizflüssigkeit führenden Strömungskanal (31) der nachfolgenden Stufe (46) verbunden ist.

10. System (10) nach Anspruch 9,
**dadurch gekennzeichnet, dass**
zwischen benachbarten Stufen (45, 46, 49) jeweils eine Umlenkeinheit (52, 53) angeordnet ist, die die aufzukonzentrierende Lösung (20) derart umlenkt, dass die aufzukonzentrierende Lösung (20) von unten in die nachfolgende Stufe (46, 49) eintritt.

11. System (10) nach einem der vorhergehenden Ansprüche,
**dadurch gekennzeichnet, dass**
das System (10) einen Verdichter (60, 61), insbesondere einen Brüdenverdichter (60) oder eine Dampfstrahlpumpe (61), umfasst, wobei ein Eingang des Verdichters (60, 61) mit einem Auslass des wenigstens einen das dampfförmige Lösungsmittel (23) führenden Strömungskanals (33) verbunden ist und ein Ausgang des Verdichters (60, 61) mit einem Einlass des wenigstens einen den Heizdampf (22) führenden Strömungskanals (31) verbunden ist und wobei der Verdichter (61, 62) insbesondere die Temperatur und den Druck des dampfförmigen Lösungsmittels (23) erhöht und dies dem wenigstens einen den Heizdampf (22) führenden Strömungskanal (31) zuführt.

12. Verfahren zur Kristallisation eines in einem Lösungsmittel gelösten auszukristallisierenden Stoffs, wobei eine aufzukonzentrierende Lösung (20), die das Lösungsmittel mit dem darin gelösten auszukristallisierenden Stoff aufweist, ein Heizdampf (22) oder eine Heizflüssigkeit und dampfförmiges Lösungsmittel (23) durch jeweilige Strömungskanäle (30, 31, 33) geführt werden, wobei ein jeweiliger die aufzukonzentrierende Lösung (20) führender Strömungskanal (30) von einem jeweiligen den Heizdampf (22) oder die Heizflüssigkeit führenden Strömungskanal (31) zumindest teilweise durch eine dampfdichte und flüssigkeitsdichte Wand (34) getrennt ist und der jeweilige die aufzukonzentrierende Lösung (20) führende Strömungskanal (30) von einem jeweiligen das dampfförmige Lösungsmittel (23) führenden Strömungskanal (33) zumindest teilweise durch eine für das dampfförmige Lösungsmittel, nicht jedoch für das flüssige Lösungsmittel durchlässige Membranwand (35) getrennt ist, wobei die aufzukonzentrierende Lösung (20) in dem jeweiligen die aufzukonzentrierende Lösung (20) führenden Strömungskanal (30) siedet und beim Sieden erzeugtes dampfförmiges Lösungsmittel (23) durch die Membranwand (35) hindurch in den angrenzenden, das dampfförmige Lösungsmittel (23) führenden Strömungskanal (33) gelangt, **dadurch gekennzeichnet, dass** der jeweilige die aufzukonzentrierende Lösung (20) führender Strömungskanal (30) eine Breite von mindestens 3 mm aufweist und Sediment in einem Sedimentsammelbehälter (37), der sich unten an einen jeweiligen die aufzukonzentrierende Lösung (20) führenden Strömungskanal (30) anschließt, aufgefangen wird.

13. Verfahren nach Anspruch 12,
**dadurch gekennzeichnet, dass**
das Sieden der aufzukonzentrierenden Lösung (20) bei einem Unter- oder Überdruck bezogen auf den Umgebungsdruck erfolgt.

14. Verfahren nach Anspruch 12 oder 13,
**dadurch gekennzeichnet, dass**
in dem wenigstens einen das dampfförmige Lösungsmittel (23) führenden Strömungskanal (33) ein niedrigerer Druck herrscht als in dem wenigstens einen den Heizdampf (22) oder die Heizflüssigkeit führenden Strömungskanal (31).

15. Verfahren nach einem der Ansprüche 12 bis 14,
**dadurch gekennzeichnet, dass**
der die aufzukonzentrierende Lösung (20) führende Strömungskanal (30) eine Breite von nicht mehr als 10 mm aufweist.

## Claims

1. System (10) for crystallization of a substance to be crystallized that is solved in a solvent, with a solution to be concentrated (20), which contains the solvent with the substance to be crystallized solved in it and a crystallization apparatus (11) with hot vapor (22) or hot liquid flowing through it, wherein the crystallization apparatus (11) has at least one flow channel (30) transporting the solution to be concentrated (20), at least one flow channel (31) transporting the hot vapor (22) or the hot liquid, and at least one flow channel (33) transporting the vaporous solvent (23), wherein a respective flow channel (30) transporting the solution to be concentrated (20) is at least partially separated by a vapor-proof and liquid- proof wall (34) from a respective flow channel (31) transporting the hot vapor (22) or the hot liquid, and the respective flow channel (30) transporting the solution to be concentrated (20) is separated at least partially by a membrane wall (35), which is permeable for the vaporous solvent but not for the liquid solvent, from a respective flow channel (33) transporting the vaporous solvent(23), wherein the crystallization apparatus (11) is so designed that the solution to be concentrated (20) is boiling in the respective flow channel (30) transporting the solution to be concentrated (20) and that the vaporous solvent (23) generated during the boiling reaches through the membrane wall (35) to the adjacent flow channel (33) transporting the vaporous solvent (23), **characterized in that** the respective flow channel (30) transporting the solution to be concentrated (20) has a width of at least 3 mm, and a sediment collecting tank (37) below connects to a respective flow channel (30) transporting the solution to be concentrated (20).

2. System (10) according to Claim 1,
**characterized in that**
the crystallization apparatus (11) is operated at low pressure or overpressure with regard to the ambient pressure.

3. System (10) according to Claim 1 or 2,
**characterized in that**
in the at least one flow channel (33) transporting the vaporous solvent (23) there is lower pressure than in the at least one flow channel (31) transporting the hot vapor (22) or the hot liquid.

4. System (10) according to one of the preceding claims,
**characterized in that**
the flow channel (30) transporting the solution to be concentrated (20) has a width of no more than 10 mm.

5. System (10) according to one of the preceding claims,
**characterized in that**
the sediment collecting tank (37) is filled with the solution to be concentrated (20) but is not flown through by the solution to be concentrated (20).

6. System (10) according to one of the preceding claims,
**characterized in that**
a liquid collecting tank (38) for collecting the solution to be concentrated (20), which eventually penetrates through leakage in a respective flow channel (33) transporting the vaporous solvent (23), is connected below to the respective flow channel (33) transporting the vaporous solvent (23), wherein the liquid collecting tank (38) is separated in particular from the sediment collecting tank (37) by a partition wall (39).

7. System (10) according to Claim 6,
**characterized in that**
the liquid collecting tank (38) is connected with the at least one flow channel (30) transporting the solution to be concentrated (20) in order to transport at least partially the solution to be concentrated (20) in the liquid collecting tank (38) to the at least one flow channel (30) transporting the solution to be concentrated (20)

8. System (10) according to one of the preceding claims,
**characterized in that**
the crystallization apparatus (11) comprises several flow channels (30), parallel to each other, transporting the solution to be concentrated (20), several flow channels (31), parallel to each other, transporting the hot vapor (22) or the hot liquid, and several flow channels (33), parallel to each other, transporting the vaporous solvent (23), wherein, in particular, two flow channels (30) transporting the solution to be concentrated (20) are assigned to at least one of the flow channels (31) transporting the hot vapor (22) or the hot liquid, which are arranged on the opposite sides of the respective flow channel (31) transporting the hot vapor (22) or the hot liquid, and two flow channels (30) transporting the solution to be concentrated (20) are assigned to at least one of the flow channels (33) transporting the vaporous solvent (23), which are arranged on the opposite sides of the respective flow channel (33) transporting the vaporous solvent (23).

9. System (10) according to one of the preceding claims,
**characterized in that**
the crystallization apparatus (11) has several levels (45, 46, 49) connected one after another, wherein each level (45, 46, 49) has at least one flow channel (30) transporting the solution to be concentrated (20), at least one flow channel (31) transporting the hot vapor (22) or the hot liquid, and at least one flow channel (33) transporting the vaporous solvent (23), and wherein the at least one flow channel (33) transporting the vaporous solvent (23) of one of the levels (45) is connected with the at least one flow channel (31) of the next level (46) transporting the hot vapor (22) or the hot liquid.

10. System (10) according to Claim 9,
**characterized in that**
between the adjacent levels (45, 46, 49) a redirecting unit (52, 53) is arranged respectively, which redirects the solution to be concentrated (20) in such a way that the solution to be concentrated (20) enters from below in the next level (46, 49).

11. System (10) according to one of the preceding claims,
**characterized in that**
the system (10) comprises a compressor (60, 61), in particular an exhaust vapor compressor (60) or a steam jet pump (61), wherein an input of the compressor (60, 61) is connected with an outlet of the at least one flow channel (33) transporting the vaporous solvent (23) and one output of the compressor (60, 61) is connected with an inlet of the at least one flow channel (31) transporting the hot vapor (22), and wherein the compressor (61, 62) increases, in particular, the temperature and the pressure of the vaporous solvent (23) and directs it to the at least one flow channel (31) transporting the hot vapor (22).

12. Method for crystallization of a substance to be crystallized that is solved in a solvent, wherein a solution to be concentrated (20), which contains the solvent with the substance to be crystallized solved in it, hot vapor (22) or hot liquid and vaporous solvent (23), are fed through the respective flow channels (30, 31, 33), wherein a respective flow channel (30) transporting the solution to be concentrated (20) from a flow channel (31) transporting the hot vapor (22) or the hot liquid is separated at least partially by a vapor-proof and liquid-proof wall (34), and the respective flow channel (30) transporting the solution to be concentrated (20) is separated at least partially from a respective flow channel (33) transporting the vaporous solvent (23) by a membrane wall (35), which is permeable for the vaporous solvent but not for the liquid solvent, wherein the solution to be concentrated (20) in the respective flow channel (30) transporting the solution to be concentrated (20) is boiling and the vaporous solvent (23) generated during the boiling reaches through the membrane wall (35) to the adjacent flow channel (33) transporting the vaporous solvent (23), **characterized in that** the respective flow channel (30) transporting the solution to be concentrated (20) has a width of at least 3 mm and the sediment is collected in a sediment collecting tank (37), which is connected below to a particular flow channel (30) transporting the solution to be concentrated (20).

13. Method according to Claim 12,
**characterized in that**
the boiling of the solution to be concentrated (20) takes place at a low pressure or overpressure with regard to the ambient pressure.

14. Method according to Claim 12 or 13,
**characterized in that**
in the at least one flow channel (33) transporting the vaporous solvent (23) there is lower pressure than in the at least one flow channel (31) transporting the hot vapor (22) or the hot liquid.

15. Method according to one of the claims 12 to 14,
**characterized in that**
the flow channel (30) transporting the solution to be concentrated (20) has a width of no more than 10 mm.

## Revendications

1. Système (10) de cristallisation d'une substance à recristalliser dissoute dans un solvant, comprenant un dispositif de cristallisation (11) traversé par une solution à concentrer (20), qui contient le solvant dans lequel la substance à recristalliser est dissoute, et par de la vapeur de chauffage (22) ou un liquide de chauffage, dans lequel le dispositif de cristallisation (11) comporte au moins un canal d'écoulement (30) guidant la solution à concentrer (20), au moins un canal d'écoulement (31) guidant la vapeur de chauffage (22) ou le liquide de chauffage, et au moins un canal d'écoulement (33) guidant un solvant sous forme de vapeur (23), dans lequel un canal d'écoulement (30) respectif guidant la solution à concentrer (20) est séparé au moins en partie d'un canal d'écoulement (31) respectif guidant la vapeur de chauffage (22) ou le liquide de chauffage par une paroi (34) étanche à la vapeur et au liquide, et le canal d'écoulement (30) respectif guidant la solution à concentrer (20) est séparé au moins en partie d'un canal d'écoulement (33) respectif guidant le solvant sous forme de vapeur (23) par une paroi-membrane (35) perméable au solvant sous forme de vapeur mais imperméable au solvant liquide, dans lequel le dispositif de cristallisation (11) est configuré de telle façon que la solution à concentrer (20) est portée à ébullition dans le canal d'écoulement (30) respectif guidant la solution à concentrer et que le solvant sous forme de vapeur (23) produit lors de l'ébullition traverse la paroi-membrane (35) pour passer dans le canal d'écoulement (33) adjacent guidant le solvant sous forme de vapeur (23), **caractérisé en ce que** le canal d'écoulement (30) respectif guidant la solution à concentrer (20) présente une largeur d'au moins 3 mm, et un réservoir de collecte de sédiment (37) se situe, dans la partie inférieure, dans le prolongement d'un canal d'écoulement (30) respectif guidant la solution à concentrer (20).

2. Système (10) selon la revendication 1,
**caractérisé en ce que**
le dispositif de cristallisation (11) fonctionne à une pression négative ou positive par rapport à la pression ambiante.

3. Système (10) selon la revendication 1 ou 2,
**caractérisé en ce que**
une pression inférieure à celle présente dans ledit au moins un canal d'écoulement (31) guidant la vapeur de chauffage (22) ou le liquide de chauffage règne dans ledit au moins un canal d'écoulement (33) guidant le solvant sous forme de vapeur (23).

4. Système (10) selon l'une quelconque des revendications précédentes,
**caractérisé en ce que**
le canal d'écoulement (30) guidant la solution à concentrer (20) présente une largeur non supérieure à 10 mm.

5. Système (10) selon l'une quelconque des revendications précédentes,
**caractérisé en ce que**
le réservoir de collecte de sédiment (37) est rempli de la solution à concentrer (20), mais n'est pas traversé par la solution à concentrer (20).

6. Système (10) selon l'une quelconque des revendications précédentes,
**caractérisé en ce que**
un réservoir de collecte de liquide (38), destiné à collecter la solution à concentrer (20) potentiellement passée dans le canal d'écoulement (33) respectif guidant le solvant sous forme de vapeur (23) à la suite d'une fuite, se situe dans la partie inférieure dans le prolongement d'un canal d'écoulement (33) respectif guidant le solvant sous forme de vapeur (23), dans lequel le réservoir de collecte de liquide (38) est en particulier séparé du réservoir de collecte de sédiment (37) par une cloison (39).

7. Système (10) selon la revendication 6,
**caractérisé en ce que**
le réservoir de collecte de liquide (38) est relié audit au moins un canal d'écoulement (30) guidant la solution à concentrer (20), afin d'amener au moins en partie la solution à concentrer (20) située dans le réservoir de collecte de liquide (38) audit au moins un canal d'écoulement (30) guidant la solution à concentrer (20).

8. Système (10) selon l'une quelconque des revendications précédentes,
**caractérisé en ce que**
le dispositif de cristallisation (11) comporte plusieurs canaux d'écoulement (30) parallèles les uns aux autres guidant la solution à concentrer (20), plusieurs canaux d'écoulement (31) parallèles les uns aux autres guidant la vapeur de chauffage (22) ou le liquide de chauffage ainsi que plusieurs canaux d'écoulement (33) parallèles les uns aux autres guidant le solvant sous forme de vapeur (23), dans lequel deux canaux d'écoulement (30) guidant la solution à concentrer (20), lesquels sont agencés sur les faces opposées du canal d'écoulement (31) respectif guidant la vapeur de chauffage (22) ou le liquide de chauffage, sont associés en particulier à au moins l'un des canaux d'écoulement (31) guidant la vapeur de chauffage (22) ou le liquide de chauffage, et deux canaux d'écoulement (30) guidant la solution à concentrer (20), lesquels sont agencés sur les faces opposées du canal d'écoulement (33) respectif guidant le solvant sous forme de vapeur (23), sont associés à au moins l'un des canaux d'écoulement (33) guidant le solvant sous forme de vapeur (23).

9. Système (10) selon l'une quelconque des revendications précédentes,
**caractérisé en ce que**
le dispositif de cristallisation (11) comporte plusieurs étages (45, 46, 49) montés les uns derrière les autres, dans lequel chaque étage (45, 46, 49) comprend au moins un canal d'écoulement (30) guidant la solution à concentrer (20), au moins un canal d'écoulement (31) guidant la vapeur de chauffage (22) ou le liquide de chauffage et au moins un canal d'écoulement (33) guidant le solvant sous forme de vapeur (23) et dans lequel ledit au moins un canal d'écoulement (33), guidant le solvant sous forme de vapeur (23), d'un des étages (45) est relié audit au moins un canal d'écoulement (31), guidant la vapeur de chauffage (22) ou le liquide de chauffage, de l'étage (46) suivant.

10. Système (10) selon la revendication 9,
**caractérisé en ce que**
respectivement une unité de déviation (52, 53), qui dévie la solution à concentrer (20) de telle manière que la solution à concentrer (20) pénètre du bas dans l'étage (46, 49) suivant, est agencée entre des étages (45, 46, 49) voisins.

11. Système (10) selon l'une quelconque des revendications précédentes,
**caractérisé en ce que**
le système (10) comporte un compresseur (60, 61), en particulier un compresseur de vapeur (60) ou une pompe à jet de vapeur (61), dans lequel une entrée du compresseur (60, 61) est reliée à une sortie dudit au moins un canal d'écoulement (33) guidant le solvant sous forme de vapeur (23) et une sortie du compresseur (60, 61) est reliée à une entrée dudit au moins un canal d'écoulement (31) guidant la vapeur de chauffage (22) et dans lequel le compresseur (61, 62) augmente en particulier la température et la pression du solvant sous forme de vapeur (23) et amène celui-ci audit au moins un canal d'écoulement (31) guidant la vapeur de chauffage (22).

12. Procédé de cristallisation d'une substance à recristalliser dissoute dans un solvant, dans lequel une solution à concentrer (20), qui contient le solvant dans lequel la substance à recristalliser est dissoute, de la vapeur de chauffage (22) ou un liquide de chauffage et un solvant sous forme de vapeur (23) sont guidés à travers des canaux d'écoulement (30, 31, 33) respectifs, dans lequel un canal d'écoulement (30) respectif guidant la solution à concentrer (20) est séparé au moins en partie d'un canal d'écoulement (31) respectif guidant la vapeur de chauffage (22) ou le liquide de chauffage par une paroi (34) étanche à la vapeur et au liquide, et le canal d'écoulement (30) respectif guidant la solution à concentrer (20) est séparé au moins en partie d'un canal d'écoulement (33) respectif guidant le solvant sous forme de vapeur (23) par une paroi-membrane (35) perméable au solvant sous forme de vapeur mais imperméable au solvant liquide, dans lequel la solution à concentrer (20) est portée à ébullition dans le canal d'écoulement (30) respectif guidant la solution à concentrer et le solvant sous forme de vapeur (23) produit lors de l'ébullition traverse la paroi-membrane (35) pour passer dans le canal d'écoulement (33) adjacent guidant le solvant sous forme de vapeur (23), **caractérisé en ce que** le canal d'écoulement (30) respectif guidant la solution à concentrer (20) présente une largeur d'au moins 3 mm et le sédiment est recueilli dans un réservoir de collecte de sédiment (37) qui se situe, dans la partie inférieure, dans le prolongement d'un canal d'écoulement (30) respectif guidant la solution à concentrer (20).

13. Procédé selon la revendication 12,
**caractérisé en ce que**
l'ébullition de la solution à concentrer (20) est réalisée à une pression négative ou positive par rapport à la pression ambiante.

14. Procédé selon la revendication 12 ou 13,
**caractérisé en ce que**
une pression inférieure à celle présente dans ledit au moins un canal d'écoulement (31) guidant la vapeur de chauffage (22) ou le liquide de chauffage règne dans ledit au moins un canal d'écoulement (33) guidant le solvant sous forme de vapeur (23).

15. Procédé selon l'une quelconque des revendications 12 à 14,
**caractérisé en ce que**
le canal d'écoulement (30) guidant la solution à concentrer (20) présente une largeur non supérieure à 10 mm.
